# EUROPÄISCHE PATENTSCHRIFT

(11) **EP 1 124 070 B1**
(45) Veröffentlichungstag und Bekanntmachung des Hinweises auf die Patenterteilung: **10.05.2006**
(21) Anmeldenummer: 01101931.2
(22) Anmeldetag: 29.01.2001
(51) Int. Cl.: F16D 51/50, F16D 65/22, F16D 51/00

(54) **Trommelbremse, insbesondere mechanisch betätigte Duo-Servo-Feststellbremse**
Drum brake, particularly a mechanically actuated duo-servo parking brake
Frein à tambour, en particulier un frein de stationnement à commande mécanique de type duo-servo

(30) Priorität: 10.02.2000 DE 10005845
(43) Veröffentlichungstag der Anmeldung: 16.08.2001
(73) Patentinhaber: Continental Teves AG & Co. oHG, 60488 Frankfurt (DE)
(72) Erfinder: Panek, Claus-Peter, 61449 Steinbach (DE); Wohlmann, Uwe, 63939 Worth/Main (DE); Petri, Ralph, 65843 Sulzbach/Ts. (DE)

(56) Entgegenhaltungen:
- EP-A- 0 486 341
- DE-B- 1 148 891
- GB-A- 387 810

## Beschreibung

Die Erfindung betrifft eine Trommelbremse, insbesondere mechanisch (beispielsweise über einen Seilzug) betätigte Duo-Servo-Feststellbremse, vorzugsweise Duo-Servo-Topfhandbremse, mit zumindest zwei Bremsbacken, die sich regelmäßig gegenüber einem gemeinsamen Widerlager (auch Stützlager oder Druckstück genannt) abstützen, und mit einer vorzugsweise mechanischen Betätigungsvorrichtung zwischen zwei einander gegenüberliegenden Bremsbackenenden, wobei die Betätigungsvorrichtung diametral im Vergleich zum Widerlager angeordnet ist, und wobei die Betätigungsvorrichtung die Bremsbacken zum Bremsen gegen Federkraft an eine die Bremsbacken regelmäßig umschließende Bremstrommel anlegt.

Eine derartige Trommelbremse ist durch die DE 39 25 869 C2 bekannt geworden. Bei Duo-Servo-Bremsen bzw. Feststellbremsen handelt es sich nach allgemeinem Verständnis um solche Trommelbremsen, bei welchen das Widerlager bzw. das Stützlager oder Druckstück zwischen den Bremsbacken in beiden Richtungen frei beweglich, also schwimmend, gelagert ist. Das Widerlager dient dabei praktisch ausschließlich zur Weiterleitung einer über die Betätigungsvorrichtung eingeleiteten Betätigungskraft von einer auf die andere Bremsbacke und als Nachstellvorrichtung. Insgesamt wird bei einer solchen Ausgestaltung gewährleistet, daß beide Bremsbacken bei Vorwärts- und Rückwärtsfahrt auflaufend betätigt werden.

Eine Variante einer solchen Duo-Servo-Bremse ist die mechanische, regelmäßig über Seilzug betätigte, Duo-Servo-Feststellbremse, die im Rahmen der vorliegenden Erfindung bevorzugt verfolgt wird. Diese Ausführungsform wird in Fahrzeugen verwendet, welche an allen vier Rädern mit Scheibenbremsen ausgerüstet sind. Sie ist üblicherweise im Scheibentopf einer Hinterradscheibenbremse untergebracht, so daß man auch von einer Duo-Servo-Topfhandbremse spricht, sofern als Feststelleinrichtung eine manuell betätigte Handbremseinheit zum Einsatz kommt.

Im Gegensatz zu einer durch beispielsweise Radzylinder betätigten Trommelbremse werden die Bremsbacken bei einer mechanisch betätigten Duo-Servo-Feststellbremse in der Regel durch ein Spreizschloß an die Bremstrommel gepreßt, wie dies im Detail in der DE 40 39 274 A1 beschrieben ist. Ein solches Spreizschloß setzt sich im Wesentlichen aus einer Drucklasche und einem Betätigungshebel zusammen, die sich beide an einem Gelenkbolzen abstützen und durch den bereits angesprochenen Seilzug betätigt werden, der wiederum an einem Handbremshebel endet. - Selbstverständlich werden im Rahmen der Erfindung natürlich nicht ausschließlich Spreizschlösser als Betätigungsvorrichtung verfolgt, sondern ebenso Radzylinder oder andere vergleichbar aufgebaute Spreizvorrichtungen für die Bremsbacken, wenngleich ein Spreizschloß bevorzugt vorgesehen ist.

In der GB 387 810 A wird außerdem eine mechanisch betätigbare Trommelbremse beschrieben, bei der eine einteilige Bremsbacke mittels einer Spreizvorrichtung radial gegen eine zugehörige Bremstrommel gedrückt werden kann. Dabei wirkt die Spreizvorrichtung über Verbindungselemente sowie lange Hebelarme auf die sich gegenüberliegenden Bremsbackenenden ein. Zur Vermeidung von Bauteilschwingungen der mechanischen Betätigungskomponenten während des Bremsenbetriebs sind mehrere Spriralfedern vorgesehen, die die Betätigungskomponenten verspannen. Diese Spiralfedern erfordern jedoch einen erheblichen Bauraum, der vor allem bei modernen Trommelbremsen nicht zur Verfügung steht.

Der Stand der Technik hat sich grundsätzlich bewährt, ist jedoch in zweierlei Hinsicht verbesserungsfähig. So steht zum einen zwischen Betätigungsvorrichtung und zugehöriger Radnabe in der Regel nur begrenzter Bauraum zur Verfügung. Dieser wird zumeist nicht optimal genutzt, weil die betreffende Betätigungsvorrichtung, insbesondere wenn es sich um eine Spreizschloß handelt, immer Axial- und Radialspiel aufweist. Hieraus resultiert zum anderen ein weiteres Manko, welches sich in Klappergeräuschen der Betätigungsvorrichtung äußert. Diese sind ebenfalls Folge des vorerwähnten Spiels. - Beide Aspekte bedürfen einer Verbesserung.

Dementsprechend hat sich die vorliegende Erfindung zum Ziel gesetzt, eine gattungsgemäße Trommelbremse so weiterzubilden, daß Klappergeräusche der Betätigungsvorrichtung vermieden werden und im übrigen der zur Verfügung stehende Bauraum optimal genutzt werden kann.

Die Aufgabe wird durch die Merkmale des Anspruchs 1 oder Anspruchs 2 gelöst. Die Federvorrichtung in Anspruch 2 mag als Federclip aus einem geeigneten, elastisch nachgiebigen, Werkstoff, beispielsweise Stahl und/oder Kunststoff, gefertigt sein. Auch ein Gummischlauch wie in Anspruch 1 eine andere Möglichkeit, wobei der Gummischlauch per se die erforderliche Elastizität aufweist, oder jeweils endseitig abgeschlossen sein kann, so daß das hierin eingeschlossene Gas- bzw. Luftvolumen die erforderlichen (elastischen) Rückstellkräfte aufbringt.

Üblicherweise wird die Federvorrichtung an einer im Bereich der Betätigungsvorrichtung ohnehin vorhandenen Bremsbackenzugfeder befestigt. Zu diesem Zweck kann die Federvorrichtung eine nach oben offene Befestigungshülse aufweisen, welche die vorgenannte Bremsbackenzugfeder umschließt. Zusätzlich ist hier vorgesehen, daß die Federvorrichtung mit einem Anschlag und einem Distanzstück ausgerüstet ist, wobei die Bremsbakkenzugfeder mit ihrem Federwendelabschnitt gegen den Anschlag anliegt und sich das Distanzstück im Wesentlichen bis zum Verankerungspunkt des sich an den Federwendelabschnitt anschließenden Auslegers erstreckt.

Der Anschlag, die Befestigungshülse und das Distanzstück bilden üblicherweise einen Befestigungssteg, welcher zusammen mit einem Federsteg insgesamt die Federvorrichtung bildet. Dieser Federsteg sorgt nun primär für die radialelastische Beaufschlagung der Betätigungsvorrichtung. Zu diesem Zweck ist der Federsteg in Aufsicht größtenteils senkrecht im Vergleich zur Längsausdehnung des Befestigungssteges angeordnet, und zwar in Richtung auf die Betätigungsvorrichtung. Außerdem steht der Federsteg in Frontansicht hauptsächlich stumpf auf dem Distanzstück auf und legt sich kopfseitig an eine obere Kante der Betätigungsvorrichtung an.

Hierdurch wird die Betätigungsvorrichtung mit einer im Vergleich zur Bremstrommel größtenteils radial verlaufenden (elastischen) Kraft beaufschlagt, i.e. radialelastisch. Diese Kraftrichtung wird eingestellt, um die zuvor angesprochenen Probleme zu beherrschen. Tatsächlich lassen sich dadurch Klappergeräusche der Betätigungsvorrichtung zuverlässig vermeiden. Auch wird hierdurch ein größerer Freiraum zwischen der Betätigungsvorrichtung und einem Lagerflansch der Radnabe zur Verfügung gestellt, so daß sich der zur Verfügung stehende Bauraum optimal nutzen läßt.

Immer sorgt die Federvorrichtung dafür, daß die Betätigungsvorrichtung bzw. das Spreizschloß nach seiner bzw. ihrer Betätigung wieder in die entsprechende Ausgangslage zurückbewegt wird. Dabei wirkt die Federvorrichtung in der Regel so, daß die Betätigungsvorrichtung an ihrer radial inneren Kante mit ihrer Hilfe beaufschlagt wird. Folglich sorgt die Federvorrichtung für eine Vorspannung der Betätigungsvorrichtung in Richtung vom Zentrum der Bremstrommel weg.

Hierbei macht sich die Erfindung die Tatsache zunutze, daß die Betätigungsvorrichtung bei einer erfindungsgemäßen Trommelbremse in der Regel entlang einer Sehne im Vergleich zur kreiszylindrisch ausgeführten Bremstrommel angeordnet ist, und zwar üblicherweise symmetrisch in Bezug auf eine zentrale Radiuslinie. Wenn nun mit einer Andrückkraft gearbeitet wird, die im Vergleich zu der Radiuslinie größtenteils gleichgerichtet ist, läßt sich dafür sorgen, daß die Betätigungsvorrichtung im Vergleich zu ihren beiden endseitigen Anlenkpunkten an den Bremsbacken gleichmäßig vorgespannt wird und einwandfrei gegen ohnehin vorhandene Anschläge gedrückt wird.

Vergleichbares gilt für den Fall, daß die Federvorrichtung als Gummischlauch ausgeführt ist. Denn hier eröffnet die Erfindung die Möglichkeit, daß dieser Gummischlauch gleichsam über den Federwendelabschnitt der Bremsbackenzugfeder gestülpt werden kann. Da die Bremsbackenzugfeder üblicherweise in unmittelbarer Nachbarschaft zu der Betätigungsvorrichtung angeordnet ist, führt dies dazu, daß der Gummischlauch praktisch von der Bremsbackenzugfeder elastische Rückstellkräfte auf die Betätigungsvorrichtung überträgt und diese - wie der zuvor beschriebene Federclip - radialelastisch beaufschlagt.

Selbstverständlich liegt auch eine Ausgestaltung im Rahmen der Erfindung, bei welcher der angesprochene Gummischlauch unabhängig von der Bremsbackenzugfeder an die Betätigungsvorrichtung - diese elastisch vorspannend - angelegt wird. Dann eröffnet sich auch die weitere Variationsmöglichkeit, diesen Gummischlauch jeweils endseitig abzudecken und so das eingeschlossene Gas- bzw. Luftvolumen als Gas- oder Luftfeder - neben dem elastischen Gummimantel - zu nutzen.

Jedenfalls werden im Rahmen der Erfindung etwaige Klappergeräusche der Betätigungsvorrichtung bei der beschriebenen Trommelbremse zuverlässig unterdrückt. Auch der zur Verfügung stehende Bauraum zwischen Betätigungsvorrichtung und Nabe bzw. Lagerflansch eines Rades oder einer Radbefestigung kann nun optimal genutzt werden, weil bisher vollführte Bewegungen der Betätigungsvorrichtung nicht (mehr) auftreten. Dies gilt insbesondere für solche Bewegungen infolge Spiels, welche in Radialrichtung verlaufen. Aber auch axiale Bewegungen der Betätigungsvorrichtung werden unterbunden, weil diese praktisch immer mit Vorspannung an ohnehin vorhandene Anschläge gedrückt wird.

Dies gilt auch für den Fall, daß mit einem Kunststoffclip oder dem beschriebenen Gummischlauch gearbeitet wird, die beide - wie der zuvor behandelte Federclip - auf der Bremsbackenzugfeder vormontiert werden können und für die gewünschte Abstützung der Betätigungsvorrichtung sorgen.

Folglich eignet sich die beschriebene Federvorrichtung besonders zur Nachrüstung und ist wegen des einfachen Aufbaus außerordentlich kostengünstig herzustellen. Immer ist ein einwandfreier Sitz auf oder an der Bremsbackenzugfeder gewährleistet, und zwar beim Federclip durch die Befestigungshülse in Verbindung mit dem Distanzstück, welches auf der Bremsbakke gegen Verdrehen gesichert ist. Beim Kunststoffclip und dem Gummischlauch gestaltet sich derartiges insofern noch einfacher, als hier eine direkte Montage auf dem Federwendelabschnitt präferiert wird, so daß schon vom Ansatz her Verdrehungen oder ein Verrutschen dieser Federvorrichtungen ausgeschlossen werden kann. Hierin sind die wesentlichen Vorteile der Erfindung zu sehen.

Im folgenden wird die Erfindung anhand einer lediglich ein Ausführungsbeispiel darstellenden Zeichnung näher erläutert; es zeigen:
Figur 1 eine erfindungsgemäße Trommelbremse in Aufsicht,
Figur 2 einen vergrößerten Ausschnitt aus Figur 1 im Bereich der Betätigungsvorrichtung,
Figur 3 den Gegenstand nach Figur 2 im Querschnitt und
Figuren 4a bis 4e verschiedene Ansichten des Federclips in Verbindung mit der Bremsbackenzugfeder,
Figuren 5a bis 5b zwei Ansichten einer als Kunstoffclip ausgeführten Federvorrichtung in Verbindung mit der Bremsbackenzugfeder,
Figuren 6a-6b zwei teilweise geschnittene Teilansichten einer gattungsgemäßen Trommelbremse mit einem Gummischlauch als Federvorrichtung..

In den Figuren ist eine Trommelbremse, nach dem Ausführungsbeispiel eine Duo-Servo-Topfhandbremse, dargestellt. Diese läßt sich mechanisch über einen nicht ausdrücklich gezeigten Seilzug betätigen, und zwar in dem dieser an einer Betätigungsvorrichtung 1, vorliegend einem Spreizschloß 1, angreift. Die Funktionsweise und die jeweiligen kinematischen Verhältnisse werden in den eingangs bereits angeführten Schriften DE 39 25 869 C2 und DE 40 39 274 A1 im Detail beschrieben, so daß hierauf verwiesen sei.

Festzuhalten bleibt, daß das Spreizschloß 1 als wesentliche Bestandteile eine Drucklasche 2 und einen Betätigungshebel 3 aufweist, die sich beide an einem Gelenkbolzen 4 abstützen. Die Betätigung des Spreizschlosses 1 erfolgt - wie gesagt - durch den nicht dargestellten Seilzug.

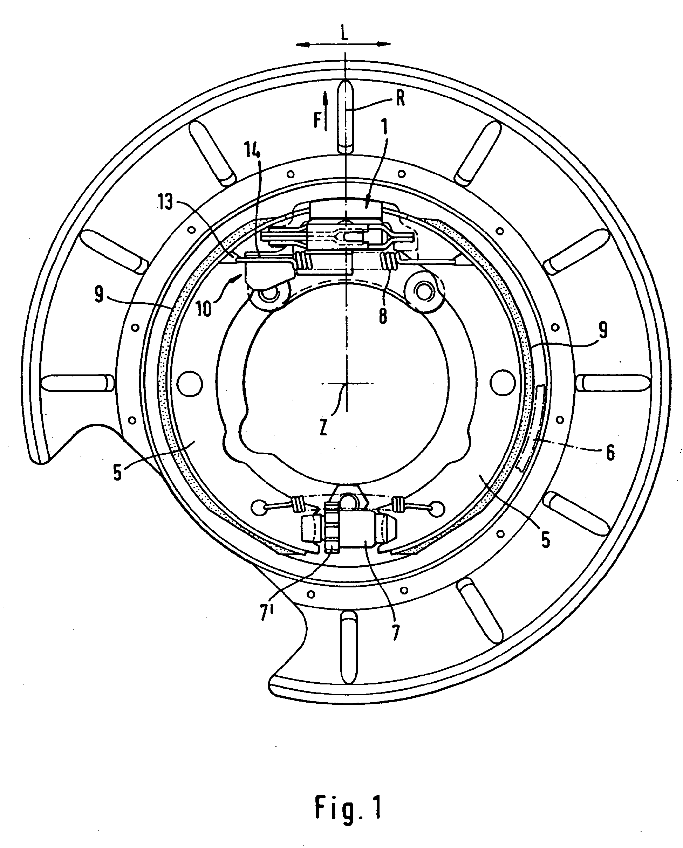

Mit Hilfe dieses Seilzuges wird das Spreizschloß 1 in seiner Länge verändert, und zwar in einer Richtung, wie dies durch einen Doppelpfeil L in der Figur 1 angedeutet ist. Wenn das Spreizschloß 1 auseinander gedrückt wird, legen sich zwei Bremsbacken 5 gegen eine Bremstrommel 6 an.

Zu diesem Zweck stützen sich die beiden Bremsbacken 5 gegenüber einem gemeinsamen Widerlager bzw. Stützlager oder Druckstück 7 ab, welches dem Spreizschloß 1 diametral gegenüberliegend angeordnet ist. Dieses Widerlager 7 ist mit einer Nachstellvorrichtung 7' ausgerüstet.

Das Spreizschloß 1 öffnet sich gegen Federkraft, welche von einer Bremsbackenzugfeder 8 aufgebracht wird. Diese Bremsbakkenzugfeder 8 erstreckt sich im Rahmen des Ausführungsbeispieles parallel zum Spreizschloß 1 und befindet sich gegenüber diesem in unmittelbarer Nachbarschaft. Vom Zentrum Z der dargestellten Trommelbremse bzw. der Bremstrommel 6 aus gesehen, befindet sich die Bremsbackenzugfeder 8 im Vergleich zum Spreizschloß 1 radial innenseitig.

Die Bremstrommel 6 ist - wie gewöhnlich - kreiszylindrisch und topfförmig ausgestaltet und umschließt die beiden Bremsbacken 5, die ihrerseits einen T-förmigen Querschnitt mit einem jeweiligen, der Bremstrommel 6 zugewandten, Flansch aufweisen. Auf diesem Flansch ist ein zugehöriger Bremsbelag 9 befestigt.

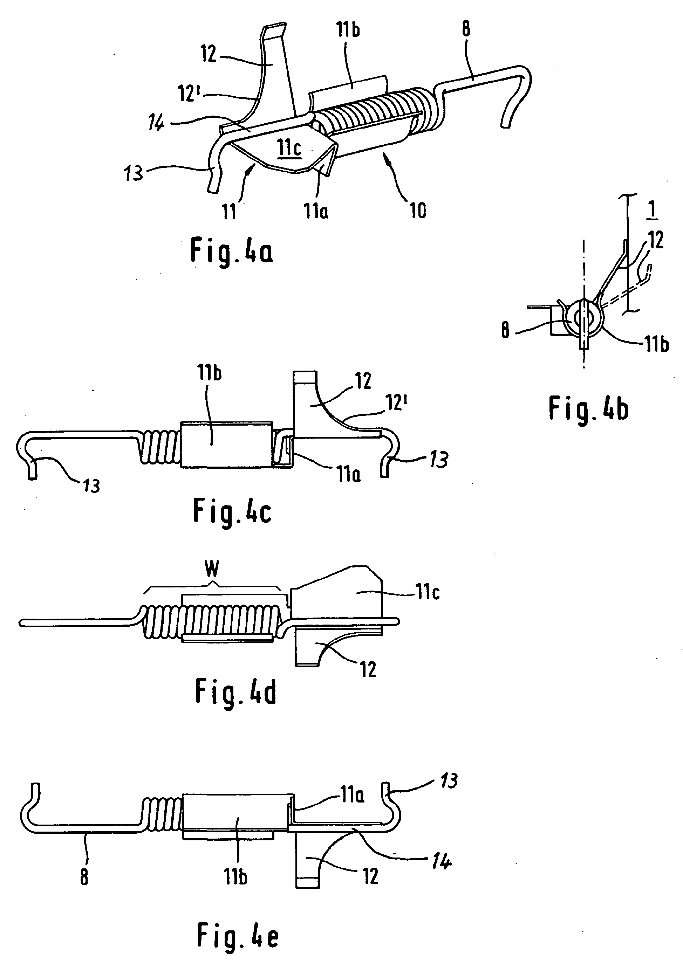

Erfindungsgemäß weist die Trommelbremse eine Federvorrichtung 10 auf, welche einer im wesentlichen radialelastischen Beaufschlagung der Betätigungsvorrichtung bzw. des Spreizschlosses 1 dient. Diese Federvorrichtung 10 ist im Detail in den Figuren 4a bis 4f dargestellt. Die radialelastische Beaufschlagung des Spreizschlosses 1 mit Hilfe der Federvorrichtung 10 wird im Rahmen der Erfindung so bewerkstelligt, daß diese Federvorrichtung 10 eine elastische Kraft bzw. Andrückkraft F erzeugt, die im wesentlichen in Radialrichtung im Vergleich zum Zentrum Z gerichtet ist. Dies ist durch einen entsprechenden Pfeil in Figur 1 angedeutet. Durch diese Kraft bzw. Kraftkomponente F wird erreicht, daß das Spreizschloß 1 radial nach außen gedrückt wird, weil die Federvorrichtung 10 nach dem Ausführungsbeispiel die radial innere Kante der Betätigungsvorrichtung bzw. des Spreizschlosses 1 beaufschlagt.

Die vorbeschriebenen Kraftverhältnisse stellen sich gleichsam automatisch ein, weil die Federvorrichtung 10 nach dem Ausführungsbeispiel an der Bremsbackenzugfeder 8 befestigt ist, die ihrerseits radialinnenseitig im Vergleich zum Spreizschloß 1 angeordnet ist. Die Federvorrichtung 10 stützt sich also an dieser Bremsbackenzugfeder 8 ab und drückt das Spreizschloß 1 von dieser Feder 8 weg. Dabei erstreckt sich die Betätigungsvorrichtung 1 entlang eine Sehne im Vergleich zur kreiszylindrischen Bremstrommel 6. Die Andrückkraft F wirkt nun größtenteils gleichgerichtet bzw. parallel zu einer zentralen Radiuslinie R (vgl. Fig. 1), die die Trommelbremse in zwei im Wesentlichen spiegelsymmetrische Hälften teilt.

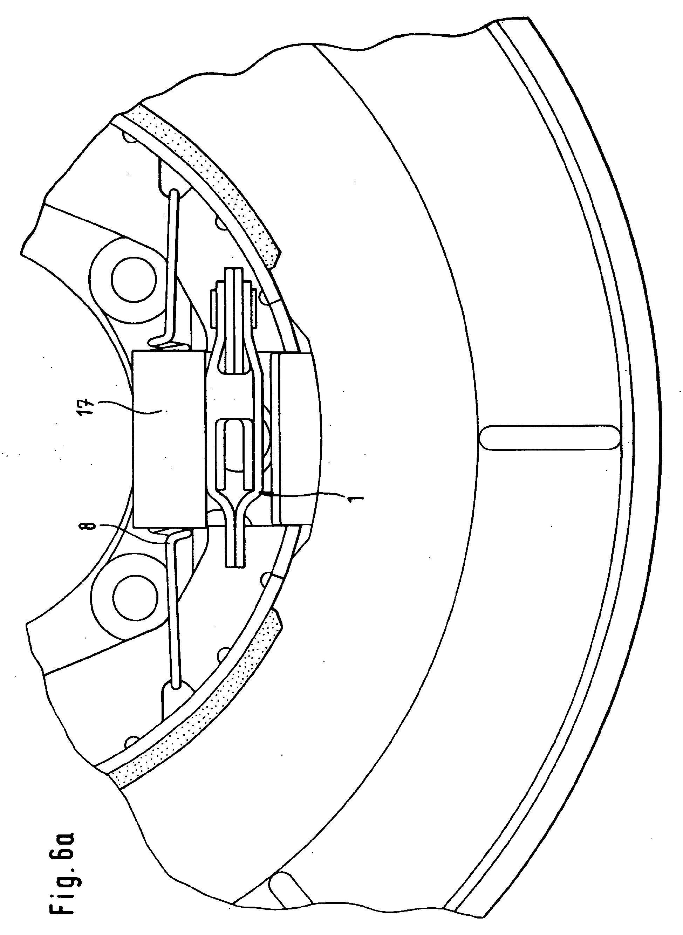

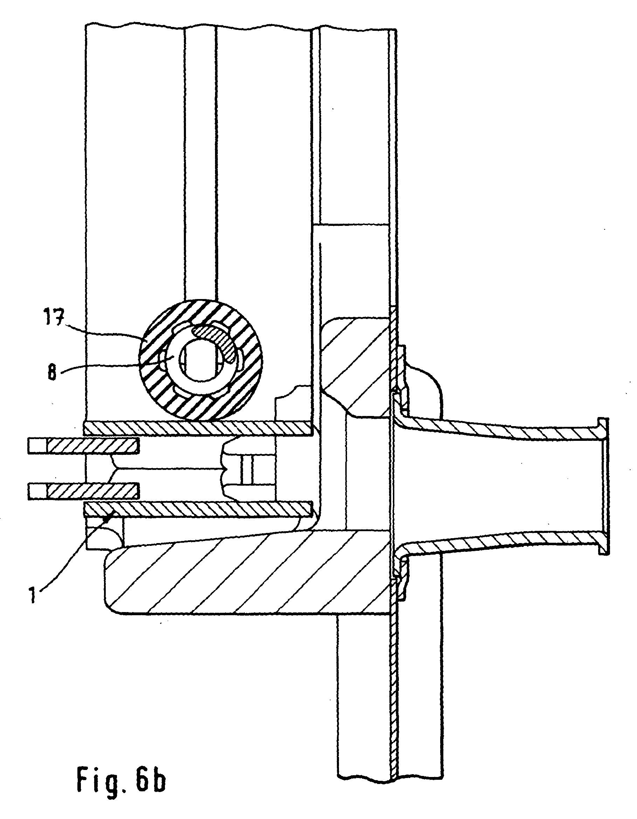

Im Rahmen des dargestellten Beispiels wird die Andrückkraft im Detail so aufgebracht, daß die Federvorrichtung 10 als Federclip 10 aus beispielsweise Stahl oder Kunststoff ausgebildet ist. Grundsätzlich ist an dieser Stelle auch ein Gummischlauch 17 denkbar (Figur 6a, b), welcher schlicht und ergreifend über einen Federwendelabschnitt W der Bremsbackenzugfeder 8 geschoben wird. Durch die unmittelbare Nachbarschaft zwischen der Bremsbackenzugfeder 8 und dem Spreizschloß 1 stellen sich die beschriebenen Rückstellkräfte praktisch automatisch ein.

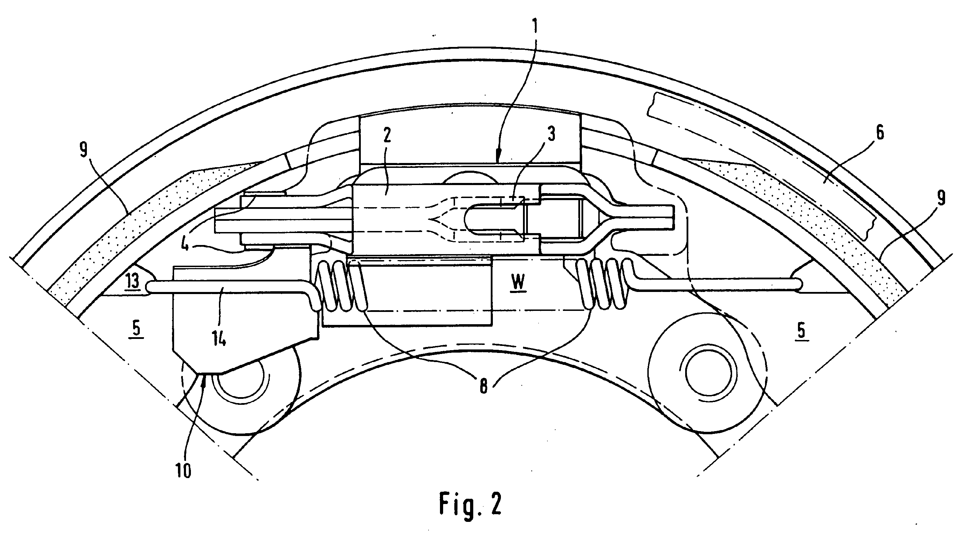

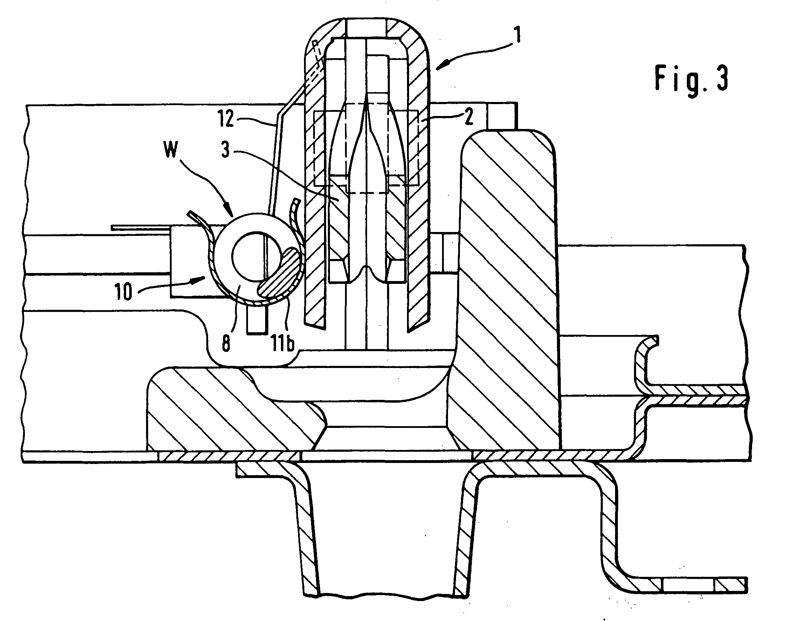

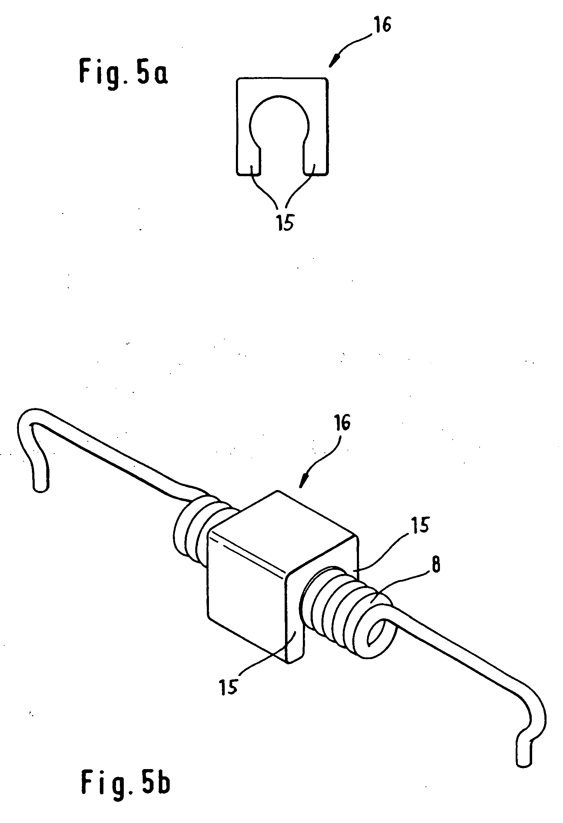

Anhand der Figuren 2,3 und insbesondere 4a bis 4e erkennt man, daß es sich im Rahmen des Ausführungsbeispiels bei der Federvorrichtung 10 um eine solche handelt, die hauptsächlich aus einem Befestigungssteg 11 und einem Federsteg 12 zusammengesetzt ist. Dies gilt auch für die in Figur 5a gezeigte Abwandlungsform.

Der Befestigungssteg 11 besteht aus einem Anschlag 11a, einer Befestigungshülse 11b und einem Distanzstück 11c. Die Befestigungshülse 11b ist nach oben hin offen gestaltet und umschließt den Federwendelabschnitt W der Bremsbackenzugfeder 8. Dabei erfolgt eine Verbindung zwischen Befestigungshülse 11b und Federwehdelabschnitt W, indem die Befestigungshülse 11b den entsprechenden Abschnitt durch Federkraft zurückschnappend umgreift, wie die Figuren 4a und 4d unmittelbar deutlich machen. Folglich ist an dieser Stelle für die nötige Festlegung des Federclipses 10 an der Bremsbackenzugfeder 8 gesorgt.

Die Bremsbackenzugfeder 8 liegt mit ihrem Federwendelabschnitt W gegen den Anschlag 11a an, wobei sich das Distanzstück 11c im Wesentlichen bis zu einem Verankerungspunkt 13 des sich an den Federwendelabschnitt W anschließenden Auslegers 14 erstreckt. Dies macht besonders die Figur 2 deutlich. Das Distanzstück 11c ist auf der zugehörigen Bremsbacke 5 verdrehsicher angeordnet. Hierfür können entsprechende Anschläge oder schlichtweg eine einstückige Auslegung von Federclip 10 und Bremsbackenzugfeder 8 sorgen.

Der Federsteg 12 ist in Aufsicht größtenteils senkrecht im Vergleich zur Längsausdehnung des Befestigungssteges 11 angeordnet, und zwar in Richtung auf die Betätigungsvorrichtung 1 (vgl. Fig. 4d). In Frontansicht steht der Federsteg 12 - in unbelastetem, gestrichelt dargestellten Zustand - stumpf auf dem Distanzstück 11c auf. Im durchgezogen gezeichneten Einbauzustand liegt der Federsteg 12 kopfseitig an einer oberen Kante des Spreizschlosses 1 an. Diese topologischen Verhältnisse ergeben sich insbesondere aus den Figuren 3 und 4. Hier erkennt man auch, daß der Federsteg 12 eine radiale Aussparung 12'aufweist, die für einen lediglich punktuellen kopfseitigen Kontakt des Federsteges 12 mit der Betätigungsvorrichtung 1 sorgt. Verkantungen des Federsteges 12 an dieser Stelle werden also ausgeschlossen, so daß ein allseits strammer Sitz gewährleistet ist.

Insbesondere ein Vergleich der Darstellungen in den Fig. 3 und 4 macht deutlich, daß durch das kopfseitige Angreifen des Federsteges 12 am Spreizschloß 1 mit relativ geringen Federkräften des Federsteges 12 gearbeitet werden kann. Denn der Federclip 10 stützt das Spreizschloß 1 am höchstmöglichen Kraftangriffspunkt ab.

Diese geringen Federkräfte stellen sich ein, weil der Federsteg 12 hauptsächlich auf Torsion belastet und an dieser Stelle mit größtmöglichem Hebelarm gearbeitet wird, folglich das vom Federclip 10 aufzubringende Gegendrehmoment klein ist.

Eine analoge Ausführung für die Federvorrichtung ist den Figuren 5a-5b zu entnehmen. Sie zeigen eine Federvorrichtung, die im wesentlichen als quaderförmiger Kunststoffclip 16 gestaltet ist. Der Kunststoffclip 16 umschließt die Bremsbakkenzugfeder 8 U-förmig und ist dadurch verliersicher und verdrehfest innerhalb der Trommelbremse gehalten. Die radialelastische Funktion des Kunststoffclips 16 ergibt sich dabei durch geeignete Werkstoffauswahl insbesondere im Bereich der die Bremsbackenzugfeder 8 umgreifenden Federstege 15. Grundsätzlich ist der Kunststoffclip 16 in seiner Gestaltung selbstverständlich nicht auf die gezeigte Ausführungsform beschränkt. Vielmehr läßt sich der Kunststoffclip 16 unter Beibehaltung der radialelastischen Federfunktion sehr leicht an die jeweiligen konstruktiven Erfordernisse anpassen.

In den Figuren 6a-6b ist die Federvorrichtung als einfacher Gummischlauch 17 ausgebildet. Dabei ist der Gummischlauch 17 auf der Bremsbackenzugfeder 8 vormontiert und umschließt diese. Unter radialer Vorspannung liegt der Gummischlauch 17 an der als Spreizschloß 1 ausgeführten Betätigungsvorrichtung an und verhindert somit wirksam Klappergeräusche. Die radialelastische Wirkung des Gummischlauches 17 ergibt sich dabei aus seinen elastischen Werkstoffeigenschaften. Zur Vereinfachung der Vormontage ist der Gummischlauch 17 an seinem Innenumfang mit einer Profilierung versehen, die das Aufschieben des Gummischlauches auf den Wendelabschnitt der Bremsbackenzugfeder 8 erleichtert. Weiterhin läßt sich durch die Profilierung das Maß der radialelastischen Wirkung des Gummischlauches 17 beeinflussen.

Alle drei genannten Ausführungen von Federvorrichtung eignen sich darüber hinaus aufgrund ihrer einfachen Gestaltung besonders gut zur Nachrüstung bei bekannten Trommelbremsen mit Betätigungsvorrichtungen, die unerwünschte Klappergeräusche erzeugen.

## Patentansprüche

1. Trommelbremse mit einer Betätigungsvorrichtung (1) zwischen zwei einander gegenüberliegenden Bremsbackenenden, welche die Bremsbacken (5) zum Bremsen an eine Bremstrommel (6) anlegt, mit einer Federvorrichtung (10, 16, 17) zur im wesentlichen radialelastischen Beaufschlagung (Kraft F) der Betätigungsvorrichtung (1), **dadurch gekennzeichnet, dass** die Trommelbremse zumindest zwei Bremsbacken (5) aufweist, und dass die Betätigungsvorrichtung (1) an ihrer radial inneren Kante mittels der Federvorrichtung (10, 16, 17) beaufschlagt wird, wobei die Federvorrichtung als ein eine Bremsbackenzugfeder (8) umschließender Gummischlauch (17) ausgebildet ist.

2. Trommelbremsemit einer Betätigungsvorrichtung (1) zwischen zwei einander gegenüberliegenden Bremsbackenenden, welche die Bremsbacken (5) zum Bremsen an eine Bremstrommel (6) anlegt, mit einer Federvorrichtung (10, 16, 17) zur im wesentlichen radialelastischen Beaufschlagung (Kraft F) der Betätigungsvorrichtung (1), d**adurch gekennzeichnet, dass** die Trommelbremse zumindest zwei Bremsbacken (5) aufweist, und **dass** die Betätigungsvorrichtung (1) an ihrer radial inneren Kante mittels der Federvorrichtung (10, 16, 17) beaufschlagt wird, wobei die Federvorrichtung (10) eine nach oben offene Befestigungshülse (11b) aufweist, welche eine im Bereich der Betätigungsvorrichtung (1) vorhandene Bremsbackenzugfeder (8) umschließt.

3. Trommelbremse nach Anspruch 2, **dadurch gekennzeichnet, dass** die Federvorrichtung (10) als Federclip (10) aus beispielsweise Stahl bzw. Kunststoff (16) ausgebildet ist.

4. Trommelbremse nach einem der Ansprüche 2 bis 3, **dadurch gekennzeichnet, dass** die Federvorrichtung (10) mit einem Anschlag (11a) und einem Distanzstück (11c) ausgerüstet ist, wobei die Bremsbackenzugfeder (8) mit ihrem Federwendelabschnitt (W) gegen den Anschlag (11a) anliegt und sich das Distanzstück (11c) im Wesentlichen bis zum Verankerungspunkt (13) des sich an den Federwendelabschnitt (W) anschließenden Auslegers (14) erstreckt.

5. Trommelbremse zumindest nach Anspruch 4, **dadurch gekennzeichnet, dass** der Anschlag (11a), die Befestigungshülse (11b) und das Distanzstück (11c) einen Befestigungssteg (11) bilden, welcher zusammen mit einem Federsteg (12) die Federvorrichtung (10) formt.

6. Trommelbremse nach Anspruch 5, **dadurch gekennzeichnet, dass** der Federsteg (12) in Aufsicht größtenteils senkrecht im Vergleich zur Längsausdehnung des Befestigungssteges (11) angeordnet ist (vgl. Fig. 4d).

7. Trommelbremse zumindest nach Anspruch 5, **dadurch gekennzeichnet, dass** der Federsteg (12) in Frontansicht stumpf auf dem Distanzstück (11c) aufsteht und kopfseitig an einer oberen Kante der Betätigungsvorrichtung (1) anliegt (vgl. Fig. 4b).

8. Trommelbremse nach einem der vorherigen Ansprüche, **dadurch gekennzeichnet, dass** die Betätigungsvorrichtung (1) als Spreizschloß ausgeführt ist.

9. Trommelbremse nach einem der vorherigen Ansprüche, **dadurch gekennzeichnet, dass** die Trommelbremse als mechanisch betätigte Duo-Servo-Feststellbremse ausgebildet ist.

## Claims

1. Drum brake with an actuating device (1) between two opposed brake shoe ends which applies brake shoes (5) to a brake drum (6) for braking, with a spring device (10, 16, 17) for the substantially radially elastic application (force F) of the actuating device,
**characterized in that** the drum brake includes at least two brake shoes (5), and **in that** the actuating device (1) at its radially inward edge is acted upon by means of the spring device (10, 16, 17), with the spring device being configured as a rubber hose (17) that encloses a brake-shoe tension spring (8).

2. Drum brake with an actuating device (1) between two opposed brake shoe ends which applies brake shoes (5) to a brake drum (6) for braking, with a spring device (10, 16, 17) for the substantially radially elastic application (force F) of the actuating device,
**characterized in that** the drum brake includes at least two brake shoes (5), and **in that** the actuating device (1) at its radially inward edge is acted upon by means of the spring device (10, 16, 17), with the spring device (10) including an upwards open attachment sleeve (11b) that encloses a brake-shoe tension spring (8) provided in the area of the actuating device (1).

3. Drum brake as claimed in claim 2,
**characterized in that** the spring device (10) is configured as a spring clip (10) e.g. made of steel or plastics (16).

4. Drum brake as claimed in any one of claims 2 to 3,
**characterized in that** the spring device (10) is equipped with a stop (11a) and a spacer (11c), with the brake-shoe tension spring (8) bearing with its spiral coiled spring portion (W) against the stop (11a), and the spacer (11c) substantially extending up to the anchoring point (13) of the extension arm (14) which succeeds the spiral coiled spring portion (W).

5. Drum brake at least as claimed in claim 4,
**characterized in that** the stop (11a), the attachment sleeve (11b), and the spacer (11c) provide an attachment web (11) which, along with the spring web (12), forms the spring device (10).

6. Drum brake as claimed in claim 5,
**characterized in that** the spring web (12) in a top view is arranged largely vertically compared to the linear extension of the attachment web (11) (cf. Figure 4d).

7. Drum brake at least as claimed in claim 5,
**characterized in that** the spring web (12), in a front view, stands at an obtuse angle on the spacer (11c) and, at the fore part, abuts on a top edge of the actuating device (1) (cf. Figure 4b).

8. Drum brake as claimed in any one of the preceding claims,
**characterized in that** the actuating device (1) is configured as an expanding lock.

9. Drum brake as claimed in any one of the preceding claims,
**characterized in that** the drum brake is configured as a mechanically actuated duo-servo parking brake.

## Revendications

1. Frein à tambour avec un appareil d'action (1) prévu entre deux extrémités de mâchoire de frein faisant face l'un à l'autre et mettant les mâchoires de frein (5) sur un frein à tambour (6) à fin de freiner, comportant un dispositif à ressort (10, 16, 17) pour appliquer la force F essentiellement de manière radial-élastique à l'appareil d'action (1) **caractérisé en ce que** le frein à tambour comporte au moins deux mâchoires de frein (5), et qu'une force est appliquée à l'appareil d'action (1) à son arête radiale interne par l'intermédiaire d'un dispositif à ressort (10, 16, 17), le dit appareil à ressort étant configuré comme tuyau en caoutchouc (17) entourant un ressort à traction (8) de mâchoire de frein.

2. Frein à tambour avec appareil d'action (1) prévu entre deux extrémités de mâchoire de frein faisant face l'une à l'autre et mettant les mâchoires de frein (5) sur un frein à tambour (6) à fin de freiner, comportant un dispositif à ressort (10, 16, 17) pour appliquer la force F essentiellement de manière radial-élastique à l'appareil d'action (1), **caractérisé en ce que** le frein à tambour comporte au moins deux mâchoires de frein (5), et qu'une force est appliquée à l'appareil d'action (1) à son arête radiale interne par l'intermédiaire d'un dispositif à ressort (10, 16, 17), le dit appareil à ressort (10) comportant un manchon de fixation (11b) ouvert en haut et entourant un ressort de traction (8) de mâchoire de frein prévu dans le domaine de l'appareil d'action (1).

3. Frein à tambour selon la revendication 2, **caractérisé en ce que** le dispositif à ressort (10) est configuré comme pince à ressort (10) formé, par exemple, d'acier ou de matière plastique (16).

4. Frein à tambour selon l'une quelconque des revendications 2 ou 3, **caractérisé en ce que** le dispositif à ressort (10) est prévu d'une butée (11a) et d'un écarteur (11c), le ressort de traction (8) de mâchoire de frein avec sa section (W) d'hélice de ressort étant adjacent à la butée (11a) et l'écarteur (11c) s'étendant essentiellement jusqu' au point d'ancrage (13) du bras (14) suivant la section (W) d'hélice de ressort.

5. Frein à tambour au moins selon la revendication 4, **caractérisé en ce que** la butée (11a), le manchon de fixation (11b) et l'écarteur (11c) forment une planche de fixation (11) formant avec une planche élastique (12) le dispositif à ressort (10).

6. Frein à tambour selon la revendication 5, **caractérisé en ce que** la planche à ressort (12) en vue d'en haut la plupart du temps est disposée de manière perpendiculaire en comparaison de l'extension longitudinale du manchon de fixation (11) (v. la figure 4d).

7. Frein à tambour au moins selon la revendication 5, **caractérisé en ce que** la planche à ressort (12) en vue d'avant est disposée sur l'écarteur (11c) à un angle obtus, et à côté frontal est adjacent à l'arête supérieure de l'appareil d'action (1) (v. la figure 4b).

8. Frein à tambour selon l'une quelconque des revendications précédentes, **caractérisé en ce que** l'appareil d'action (1) est sous forme de serrure d'écartement.

9. Frein à tambour selon l'une quelconque des revendications précédentes, **caractérisé en ce que** le frein à tambour est configuré comme frein duo servo commandé de manière mécanique.
